# EUROPÄISCHE PATENTSCHRIFT

(11) **EP 1 393 972 B1**
(45) Veröffentlichungstag und Bekanntmachung des Hinweises auf die Patenterteilung: **21.06.2006**
(21) Anmeldenummer: 03090216.7
(22) Anmeldetag: 15.07.2003
(51) Int. Cl.: B60R 21/16, B60Q 5/00

(54) **Schalteinrichtung für eine Fahrzeughupe**
Switching device for vehicle horn
Dispositif de commande d'un avertisseur sonore pour véhicule

(30) Priorität: 30.08.2002 DE 10241048
(43) Veröffentlichungstag der Anmeldung: 03.03.2004
(73) Patentinhaber: Takata-Petri AG, 63743 Aschaffenburg (DE)
(72) Erfinder: Bonn, Helmut, 63808 Haibach (DE)
(74) Vertreter: Fischer, Uwe

(56) Entgegenhaltungen:
- DE-A- 19 732 022
- US-A- 4 939 951
- US-A- 5 650 600

## Beschreibung

Die Erfindung bezieht sich auf eine Schalteinrichtung für eine Fahrzeughupe mit den Merkmalen gemäß dem Oberbegriff des Anspruch 1.

Eine derartige Schalteinrichtung ist aus der deutschen Offenlegungsschrift 197 32 022 A1 bekannt. Bei der vorbekannten Schalteinrichtung bildet eine Abdeckkappe eines in der Lenkeinrichtung bzw. Lenkradstruktur eines Fahrzeugs integrierten Airbags eine Betätigungsvorrichtung für die Fahrzeughupe. Die Abdeckkappe des Airbags ist über zwei Federelemente federnd an der Lenkradstruktur befestigt. Für eine seitliche Führung der Abdeckkappe in Bezug auf die Lenkradstruktur sind in der Abdeckkappe zwei Zapfen vorgesehen, die in dazu passende Bohrungen in der Lenkradstruktur eingeführt sind. An der Abdeckkappe und an der Lenkradstruktur ist jeweils ein elektrischer Schaltkontakt vorgesehen; durch Drücken auf die federnd gelagerte Abdeckkappe werden die beiden Schaltkontakte geschlossen und die Hupe wird ausgelöst bzw. aktiviert.

Der Erfindung liegt die Aufgabe zugrunde, eine Schalteinrichtung für eine Fahrzeughupe anzugeben, die sich besonders bedienerfreundlich bedienen lässt. Als bedienerfreundlich wird es beispielsweise angesehen, wenn die Hupe stets mit der gleichen Betätigungskraft bzw. Betätigungsdruck ausgelöst wird.

Diese Aufgabe wird ausgehend von einer Schalteinrichtung der eingangs angegebenen Art erfindungsgemäß durch die kennzeichnenden Merkmale des Anspruchs 1 gelöst. Vorteilhafte Ausgestaltungen der erfindungsgemäßen Schalteinrichtung sind in den Unteransprüchen beschrieben.

Danach ist vorgesehen, dass die Schalteinrichtung ein Betätigungselement aufweist, dass auf einer Scherenvorrichtung gelagert ist. Die Lagerung des Betätigungselementes ist dabei dergestalt, dass eine Bewegung des Betätigungselements ausschließlich entlang einer durch die Scherenvorrichtung vorgegebenen Richtung möglich ist. Ein wesentlicher Vorteil der erfindungsgemäßen Schalteinrichtung ist darin zu sehen, dass das Betätigungselement bei Druckbeaufschlagung keine "Kippbewegung" ausführen kann. Aufgrund der exakt vorgegebenen Richtung ist der zum Auslösen der Fahrzeughupe benötigte Betätigungsweg und die benötigte Betätigungskraft stets gleich groß, und zwar unabhängig davon, ob das Betätigungselement in seiner Mitte oder an seinem Randbereich betätigt bzw. mit Kraft beaufschlagt wird. Im Unterschied beispielsweise zu der vorbekannten Schalteinrichtungen ohne Scherenvorrichtung kann es bei der erfindungsgemäßen Schalteinrichtung also nicht dazu kommen, dass die Kraft zum Betätigen der Hupe bzw. der erforderliche Betätigungsweg beim Drücken des Betätigungselements von dem Ort abhängt, an dem das Betätigungselement an seiner Oberfläche gedrückt wird. Betätigungselemente für Schalteinrichtungen für Fahrzeughupen sind in der Regel nämlich sehr großflächig, um sicher zu stellen, dass ein Fahrzeugfahrer in einer Notsituation die Fahrzeughupe ohne weiteres auslösen kann, indem er auf die äußere Fläche des Betätigungselementes drückt. Ist nun das Betätigungselement - wie beispielsweise bei der vorbekannten Schalteinrichtung - federnd gelagert, so kann es dazu kommen, dass bei einem Betätigen des Betätigungselementes im Mittelbereich eine relativ große Kraft zum Auslösen der Fahrzeughupe erforderlich ist, weil nämlich alle Federelemente der Schalteinrichtung zusammengedrückt werden müssen; wird dagegen im Randbereich des Betätigungselementes auf das Betätigungselement gedrückt, so ist gegebenenfalls ausschließlich die Federkraft einer einzigen Federeinrichtung zu überwinden, was dazu führt, dass die Hupe mit relativ geringen Kraftaufwand ausgelöst wird. Im Ergebnis kann es also bei Schalteinrichtungen der vorbekannten Art ohne Scherenvorrichtung dazukommen, dass der zum Auslösen der Hupe erforderliche Kraftaufwand davon abhängt, an welcher Stelle die Hupe gedrückt wird; dies wird bei der erfindungsgemäßen Schalteinrichtung vermieden.

Besonders einfach und damit vorteilhaft lässt sich die Scherenvorrichtung in der erfindungsgemäßen Schalteinrichtung mit mindestens zwei durch mindestens ein Drehlager verbundene Scherenelemente bilden.

Um einen besonders einfachen Einbau der Scherenvorrichtung in der Schalteinrichtung des Fahrzeugs zu ermöglichen, wird es als vorteilhaft angesehen, wenn die Scherenelemente spiegelsymmetrisch aufgebaut sind. Das mindestens eine Drehlager ist dann vorteilhaft im Bereich der Spiegelachse der Scherenelemente anzuordnen.

Im Hinblick auf die Integration der Scherenvorrichtung in der Schalteinrichtung wird es als vorteilhaft angesehen, wenn die Scherenelemente jeweils mit ihrem einen Ende mit dem Betätigungselement und jeweils mit ihrem dem einen Ende gegenüberliegenden anderen Ende mit einer Grundeinheit der Schalteinrichtung in Berührung stehen, wobei die beiden Scherenelemente im Mittelbereich zwischen ihren beiden Enden das mindestens eine Drehlager aufweisen.

Die Befestigung der Scherenvorrichtung lässt sich in vorteilhafter Weise erreichen, indem die Scherenvorrichtung an vier Auflagepunkten derart in Führungslagern zentriert ist, dass sich die Scherenelemente bei Betätigung schwimmend über die vier Auflagepunkte frei bewegen können.

Zur Lagerung der Scherenelemente in den Führungslagern wird es als vorteilhaft angesehen, wenn die Scherenelemente im Lagerbereich auf gleitfähigen Kunststoff gelagert sind, weil gleitfähiger Kunststoff einen besonders niedrigen Reibungskoeffizienten aufweist.

Als vorteilhaft wird es darüber hinaus angesehen, wenn das Betätigungselement der Schalteinrichtung federnd gelagert ist; dies lässt sich vorteilhaft insbesondere dadurch erreichen, dass die Scherenvorrichtung mit einer Druck- oder Flachfeder vorgespannt wird, deren Federkraft bei der Betätigung des Betätigungselementes zu überwinden ist.

Als vorteilhaft wird es darüber hinaus angesehen, wenn die Grundeinheit der Schalteinrichtung durch die Lenkeinrichtung bzw. die Lenkradstruktur des Fahrzeugs gebildet ist.

Weist die Schalteinrichtung ein elektrisches Schaltelement auf, das durch das Betätigungselement geschlossen wird, so wird es als vorteilhaft angesehen, wenn das Scherenelement elektrisch isoliert ist und zumindest ein elektrischer Schaltkontakt des Schaltelements an der Scherenvorrichtung angeordnet ist.

Besonders einfach und vorteilhaft lässt sich die erfindungsgemäße Schalteinrichtung in einem Lenkrad eines Fahrzeugs integrieren, indem das Betätigungselement der Schalteinrichtung durch eine Abdeckkappe des Lenkrads gebildet ist und die Scherenvorrichtung zwischen der Abdeckkappe und der Lenkeinrichtung angeordnet ist. Handelt es sich um ein Lenkrad mit einer darin integrierten Airbageinrichtung, so wird es als vorteilhaft angesehen, wenn das Betätigungselement durch eine Abdeckkappe der Airbageinrichtung gebildet ist und die Scherenvorrichtung zwischen der Airbageinrichtung und der Lenkradstruktur angeordnet ist.

Im Übrigen kann einer der Schaltkontakte auch an der Lenkeinrichtung und sein Gegenkontakt an einer Airbageinheit des Fahrzeugs befestigt sein.

Darüber hinaus wird es als vorteilhaft angesehen, wenn die Scherenvorrichtung als einzelne selbsttragende vorgefertigte Baueinheit ausgebildet ist, die während der Montage der Schalteinrichtung der Lenkeinrichtung oder einer Airbageinheit zugefügt ist. Alternativ kann die Scherenvorrichtung vorteilhaft auch derart in der Schalteinrichtung als Einzelteile montiert werden, dass ihre Stabilität durch die Lenkeinrichtung oder die Airbageinheit gebildet ist.

Zur Erläuterung der Erfindung zeigen
- Figur 1 -: ein Ausführungsbeispiel für eine erfindungsgemäße Schalteinrichtung in der Seitenansicht,
- Figur 2 -: die Airbageinheit des Ausführungsbeispiels gemäß der Figur 1 in der Draufsicht,
- Figur 3 -: die Scherenvorrichtung gemäß dem Ausführungsbeispiel gemäß der Figur 1 im Detail,
- Figur 4 -: ein zweites Ausführungsbeispiel für eine Scherenvorrichtung,
- Figur 5 -: ein Ausführungsbeispiel für ein Drehlager für eine Scherenvorrichtung,
- Figur 6 -: ein Ausführungsbeispiel für eine Scherenvorrichtung mit einer Federeinrichtung,
- Figur 7 -: ein Ausführungsbeispiel für eine Scherenvorrichtung mit einer Federeinrichtung und mit elektrischen Kontakten,
- Figur 8 -: ein weiteres Ausführungsbeispiel für eine erfindungsgemäße Schalteinrichtung in der Seitenansicht und
- Figur 9 -: das weitere Ausführungsbeispiel gemäß der Figur 8 in der Draufsicht.

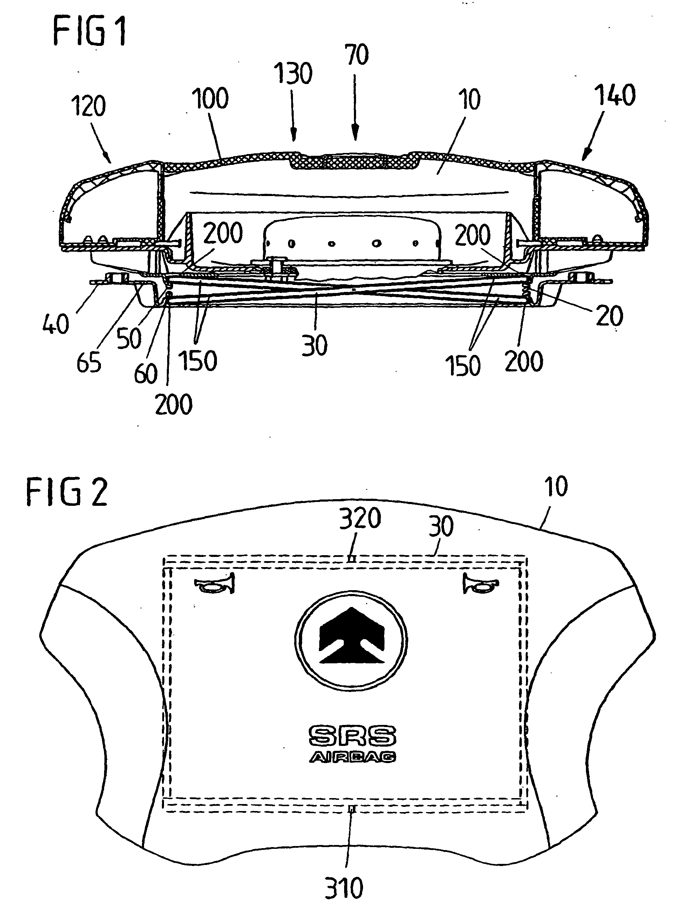

Die Figur 1 zeigt eine Airbageinheit 10, die über eine Federeinrichtung 20 und eine Scherenvorrichtung 30 an einer Lenkeinrichtung 40 befestigt ist. An der Airbageinheit 10 ist ein erster Schaltkontakt 50 befestigt, der mit einem zweiten Schaltkontakt 60 auf einem Kontaktträgerblech 65 der Lenkeinrichtung 40 in Verbindung steht bzw. mit diesem in elektrische Verbindung gebracht werden kann. Der zweite Schaltkontakt 60 wirkt also als Gegenkontakt und ist an der Lenkeinrichtung 40 angeordnet. Konkret wird zwischen dem ersten Schaltkontakt 50 und dem zweiten Schaltkontakt 60 eine elektrische Verbindung hergestellt, wenn die Airbageinheit 10 entgegen der Federkraft der Federeinrichtung 20 in Richtung Lenkeinrichtung 40 gedrückt wird.

Die Bewegung der Airbageinheit 10 in Richtung der Lenkeinrichtung 40 wird dabei durch die Scherenvorrichtung 30 festgelegt. Die Scherenvorrichtung 30 bewirkt nämlich, dass die Airbageinheit 10 ausschließlich senkrecht, das heißt entlang der durch den Pfeil 70 vorgegebenen Richtung - nach unten - bewegt werden kann. Ein Verkippen der Airbageinheit 10 ist also nicht möglich, und zwar unabhängig davon, wie auf die Abdeckkappe 100 der Airbageinheit 10 gedrückt wird.

Dies ist anschaulich durch die Pfeile 120, 130 und 140 in der Figur 1 dargestellt: Unabhängig davon, an welcher Stelle der Airbageinheit 10 und mit welcher Kraftrichtung Druck auf die Airbageinheit 10 ausgeübt wird, bewegt sich diese entlang der durch die Scherenvorrichtung 30 vorgegebenen Richtung 70. In dem Ausführungsbeispiel gemäß der Figur 1 kann sich die Airbageinheit 10 also lediglich parallel zu der durch den Pfeil 70 vorgegebenen Richtung bewegen.

In der Figur 1 lässt sich darüber hinaus erkennen, dass die Enden 150 der Scherenelemente der Scherenvorrichtung 30 in Führungslagern 200 gelagert sind, die vorzugsweise durch gleitfähigen Kunststoff gebildet sind. Durch diese Kunststofflager wird eine reibungsarme Bewegung der Scherenvorrichtung 30 ermöglicht.

Die Figur 2 zeigt die Airbageinheit 10 gemäß Figur 1 in der Draufsicht. Man erkennt, dass die Airbageinheit 10 auf der Scherenvorrichtung 30 gelagert ist. Die Scherenvorrichtung 30 ist in der Figur 2 gestrichelt dargestellt und durch zwei rechteckförmige Rahmen gebildet, die durch zwei Drehlager 310 und 320 miteinander verbunden sind.

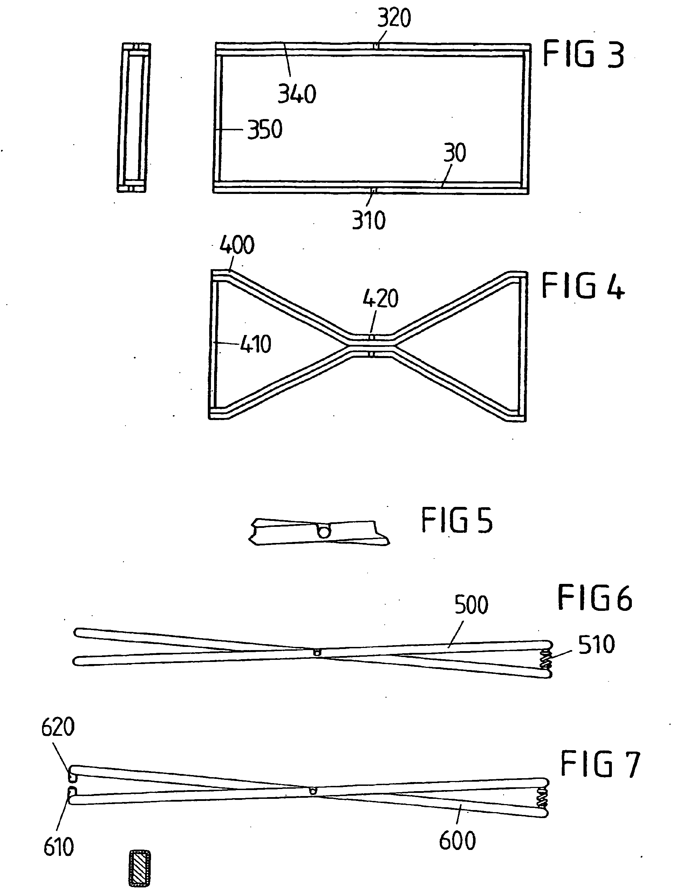

Die Figur 3 zeigt die Scherenvorrichtung gemäß dem Ausführungsbeispiel gemäß den Figuren 1 und 2 nochmals im Detail. Man erkennt die Scherenvorrichtung 30 mit den beiden Drehlagern 310 und 320, die zwei U-förmige Rahmenteile 340 und 350 miteinander verbinden. Die zwei U-förmigen Rahmenteile bilden die Scherenelemente der Scherenvorrichtung und sind gegensätzlich orientiert, wobei das kleinere Rahmenteil 350 von dem größeren Rahmenteil 340 teilweise umgeben wird.

Die Figur 4 zeigt ein zweites Ausführungsbeispiel für eine Scherenvorrichtung für die erfindungsgemäße Schalteinrichtung. Man erkennt ein äußeres Scherenelement 400, dass ein inneres Scherenelement 410 umgibt und mit diesem über ein einziges Drehlager 420 verbunden ist.

Die Figur 5 zeigt im Detail, wie das Drehlager 420 gemäß der Figur 4 bzw. die beiden Drehlager 310 und 320 gemäß der Figur 3 im Detail ausgestaltet sein können.

Die Figur 6 zeigt eine Scherenvorrichtung 500 mit einer Federeinrichtung 510, die am äußeren Ende zweier Scherenelemente der Scherenvorrichtung befestigt ist. Bei Verwendung der Scherenvorrichtung 500 gemäß der Figur 6 in dem Ausführungsbeispiel gemäß der Figur 1 würde die Scherenvorrichtung 500 nicht nur die Scherenvorrichtung 30, sondern auch die Federeinrichtung 20 ersetzen.

Die Figur 7 zeigt eine Scherenvorrichtung 600, die mit einer Federeinrichtung 510 sowie mit zwei elektrischen Schaltkontakten 610 und 620 ausgestattet ist. Mit den beiden elektrischen Schaltkontakten 610 und 620 lässt sich die Hupe des Fahrzeugs elektrisch auslösen. Bei Verwendung der Scherenvorrichtung 600 gemäß der Figur 7 in dem Ausführungsbeispiel gemäß der Figur 1 würde die Scherenvorrichtung 600 nicht nur die Scherenvorrichtung 30, sondern auch die Federeinrichtung 20 und die Schaltkontakte 50 und 60 ersetzen.

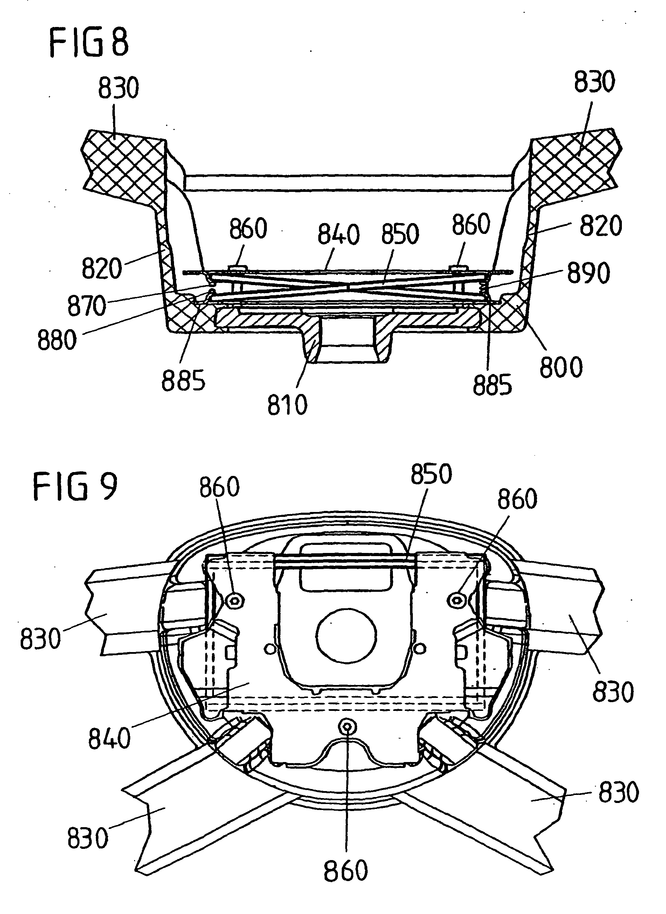

Die Figuren 8 und 9 zeigen ein weiteres Ausführungsbeispiel für eine erfindungsgemäße Schalteinrichtung. Das weitere Ausführungsbeispiel gemäß den Figuren 8 und 9 unterscheidet sich von dem ersten Ausführungsbeispiel gemäß den Figuren 1 und 2 dadurch, dass die Scherenvorrichtung im "Lenkrad" zwischen Kontaktblechen (Abdeckblech und Kontaktträgerblech) integriert ist, wohingegen sie beim Ausführungsbeispiel gemäß den Figuren 1 und 2 zwischen Airbag 10 und dem Kontaktträgerblech 65 des Lenkrads 40 angeordnet ist.

Man erkennt in der Figur 8 ein Lenkrad 800 mit einer Lenkradnabe 810, einem Korpus 820 und Lenkradspeichen 830. Ein Abdeckblech 840 liegt auf einer Scherenvorrichtung 850 auf und ist mittels Bundschrauben 860 an dem Lenkrad 800 befestigt. An dem unteren Teil des Abdeckblechs ist ein elektrischer Kontakt 870 angeordnet, der mit einem Gegenkontakt 880 auf einem Kontaktträgerblech 885 zusammenwirkt.

Außerdem erkennt man eine Federeinrichtung 890, die auf die Scherenvorrichtung 850 eine Federkraft ausübt. Zusätzlich oder auch stattdessen kann die Federkraft auch durch Spiralfedern erzeugt werden, die an den Bundschrauben 860 angebracht werden. Dies ist in der Figur 8 der Übersichtlichkeit halber nicht dargestellt.

Die Figur 9 zeigt das Ausführungsbeispiel gemäß der Figur 8 in der Draufsicht. Man erkennt die Scherenvorrichtung 850, die von dem Abdeckblech 840 abgedeckt wird. Das Abdeckblech 840 ist durch die drei Bundschrauben 860 an dem Lenkrad 800 angeschraubt. Im Übrigen zeigt die Figur 9 die Lenkradspeichen 830.

### Bezugszeichenliste

- 10: Airbageinheit
- 20: Federeinrichtung
- 30: Scherenvorrichtung
- 40: Lenkeinrichtung
- 50: erster Schaltkontakt
- 60: zweiter Schaltkontakt
- 65: Kontaktträgerblech
- 70: Pfeil
- 100: Abdeckkappe
- 120, 130, 140: Pfeile
- 150: Scherenelemente
- 200: Führungslager
- 310, 320: Drehlager
- 340, 350: Rahmenteile
- 400: äußeres Scherenelement
- 410: inneres Scherenelement
- 420: Drehlager
- 500: Scherenvorrichtung
- 510: Federeinrichtung
- 600: Scherenvorrichtung
- 610, 620: elektrische Schaltkontakte
- 800: Lenkrad
- 810: Lenkradnabe
- 820: Korpus
- 830: Lenkradspeichen
- 840: Abdeckblech
- 850: Scherenvorrichtung
- 860: Bundschrauben
- 870: elektrischer Kontakt
- 880: Gegenkontakt
- 885: Kontaktträgerblech
- 890: Federeinrichtung

## Patentansprüche

1. Schalteinrichtung für eine Fahrzeughupe mit einem Betätigungselement (10, 100), das bei Druckbeaufschlagung durch eine Bedienperson die Fahrzeughupe auslöst, **dadurch gekennzeichnet, dass**
- das Betätigungselement (10 bzw. 100) auf einer Scherenvorrichtung (30) derart gelagert ist,
- dass eine Bewegung des Betätigungselementes (10) ausschließlich entlang einer durch die Scherenvorrichtung (30) vorgegebenen Richtung (70) möglich ist.

2. Schalteinrichtung nach Anspruch 1, **dadurch gekennzeichnet, dass** die Scherenvorrichtung (30) mindestens zwei durch mindestens ein Drehlager (310, 320, 420) verbundene Scherenelemente (340, 350, 400, 410) aufweist.

3. Schalteinrichtung nach Anspruch 2, **dadurch gekennzeichnet, dass** die Scherenelemente jeweils mit ihrem einen Ende mit dem Betätigungselement und jeweils mit ihrem dem einem Ende gegenüberliegenden anderen Ende mit einer Grundeinheit (40) der Schalteinrichtung in Berührung stehen, wobei die beiden Scherenelemente (340, 350, 400, 410) im Mittelbereich zwischen ihren beiden Enden das mindestens eine Drehlager (310, 320, 420) aufweisen.

4. Schalteinrichtung nach einem der vorangehenden Ansprüche, **dadurch gekennzeichnet, dass** die Scherenelemente durch zwei U-förmige Rahmenteile (340, 350) gebildet sind, die an ihren beiden Seiten jeweils durch ein Drehlager (310 oder 320) miteinander verbunden sind.

5. Schalteinrichtung nach einem der vorangehenden Ansprüche, **dadurch gekennzeichnet, dass** die Scherenvorrichtung (30) an vier Auflagepunkten in Führungslagern (200) zentriert ist und sich bei der Betätigung schwimmend über die Auflagepunkte frei bewegen kann.

6. Schalteinrichtung nach Anspruch 5, **dadurch gekennzeichnet, dass** die Scherenvorrichtung (30) im Bereich (200) der Führungslager auf gleitfähigem Kunststoff gelagert ist.

7. Scherenvorrichtung nach einem der vorangehenden Ansprüche, **dadurch gekennzeichnet, dass** die Scherenvorrichtung (500 oder 600) mit einer Federeinrichtung (510), vorzugsweise einer Druck- oder Flachfeder, vorgespannt ist.

8. Schalteinrichtung nach einem der vorangehenden Ansprüche, **dadurch gekennzeichnet, dass** die Grundeinheit der Schalteinrichtung durch die Lenkeinrichtung (40) des Fahrzeugs gebildet ist.

9. Schalteinrichtung nach einem der vorangehenden Ansprüche, **dadurch gekennzeichnet, dass** die Scherenvorrichtung (600) elektrisch isoliert und mit mindestens einem elektrischen Schaltkontakt (610,620) ausgestattet ist, mit dem sich die Fahrzeughupe auslösen lässt.

10. Schalteinrichtung nach einem der vorangehenden Ansprüche 1 bis 8, **dadurch gekennzeichnet, dass** mindestens ein Schaltkontakt (50, 60) an der Lenkeinrichtung (40) und sein Gegenkontakt an einer Airbageinheit (10) des Fahrzeugs befestigt ist.

11. Schalteinrichtung nach einem der vorangehenden Ansprüche, **dadurch gekennzeichnet, dass** die Scherenvorrichtung als einzelne selbsttragende vorgefertigte Baueinheit ausgebildet ist, die während der Montage der Schalteinrichtung der Lenkeinrichtung (40) oder einer Airbageinheit (10) zugefügt ist.

12. Schalteinrichtung nach einem der vorangehenden Ansprüche, **dadurch gekennzeichnet, dass** die Scherenvorrichtung derart in der Schalteinrichtung als Einzelteile montiert ist, dass ihre Stabilität durch die Lenkeinrichtung oder die Airbageinheit gebildet ist.

## Claims

1. Switching device for a vehicle horn with an actuation element (10, 100) which triggers the vehicle horn when pressure is applied by an operator,
**characterized in that**
- the actuation element (10 or 100) is rotatably mounted on a scissor device (30) in such a way
- that the actuation element (10) can move exclusively in a direction (70) which is predefined by the scissor device (30).

2. Switching device according to Claim 1, **characterized in that** the scissor device (30) has at least two scissor elements (340, 350, 400, 410) which are connected by means of at least one rotary bearing (310, 320, 420).

3. Switching device according to Claim 2, **characterized in that** the one end of each of the scissor elements is in contact with the actuation element, and the respective other end, opposite the one end, is in contact with a basic unit (40) of the switching device, the two scissor elements (340, 350, 400, 410) having the at least one rotary bearing (310, 320, 420) in the central region between their two ends.

4. Switching device according to one of the preceding claims, **characterized in that** the scissor elements are formed by two U-shaped frame parts (340, 350) which are each connected on their two sides by a rotary bearing (310 or 320).

5. Switching device according to one of the preceding claims, **characterized in that** the scissor device (30) is centred on four support points in guide bearings (200) and can move freely in a floating fashion over the support points during actuation.

6. Switching device according to Claim 5, **characterized in that** the scissor device (30) is mounted in the region (200) of the guide bearings on plastic having good surface slip.

7. Scissor device according to one of the preceding claims, **characterized in that** the scissor device (500 or 600) is prestressed with a spring device (510), preferably a compression spring or flat spring.

8. Switching device according to one of the preceding claims, **characterized in that** the basic unit of the switching device is formed by the steering device (40) of the vehicle.

9. Switching device according to one of the preceding claims, **characterized in that** the scissor device (600) is electrically insulated and is equipped with at least one electrical switching contact (610, 620) with which the vehicle horn can be triggered.

10. Switching device according to one of the preceding Claims 1 to 8, **characterized in that** at least one switching contact (50, 60) is attached to the steering device (40), and its corresponding contact is attached to an airbag unit (10) of the vehicle.

11. Switching device according to one of the preceding claims, **characterized in that** the scissor device is embodied as a single, self-bearing prefabricated structural unit which is added to the steering device (40) or to an airbag unit (10) while the switching device is mounted.

12. Switching device according to one of the preceding claims, **characterized in that** the scissor device is mounted in the switching device as individual parts in such a way that its stability is formed by the steering device or the airbag unit.

## Revendications

1. Dispositif de commande d'un avertisseur sonore pour véhicule pourvu d'un élément de commande (10, 100), déclenchant l'avertisseur sonore en cas de pression de l'utilisateur, **caractérisé en ce que**
- l'élément de commande (10 et/ou 100) est installé sur un dispositif de cisaillement (30), de sorte
- qu'un mouvement de l'élément de commande (10) est possible, exclusivement le long d'une direction prédéterminée (70) du dispositif de cisaillement (30).

2. Dispositif de commande selon la revendication 1, **caractérisé en ce que** le dispositif de cisaillement (30) est pourvu d'au moins deux éléments de cisaillement (340, 350, 400, 410) reliés par au moins un coussinet de pivotement (310, 320, 420).

3. Dispositif de commande selon la revendication 2, **caractérisé en ce que** les éléments de cisaillement sont en contact, d'une part, avec l'élément de commande par l'intermédiaire de leur première extrémité, et d'autre part, avec une unité de base (40) du dispositif de commande par l'intermédiaire de leur seconde extrémité faisant face à la première extrémité, les deux éléments de cisaillement (340, 350, 400, 410) étant pourvus d'au moins un coussinet de pivotement (310, 320, 420) dans la zone du milieu entre leurs deux extrémités.

4. Dispositif de commande selon l'une quelconque des revendications précédentes, **caractérisé en ce que** les éléments de cisaillement sont constitués de deux parties de cadre en forme de U (340, 350), qui sont reliées entre elles à l'aide d'un coussinet de pivotement (310 ou 320) sur les deux côtés de celles-ci.

5. Dispositif de commande selon l'une quelconque des revendications précédentes, **caractérisé en ce que** le dispositif de cisaillement (30) est centré sur quatre points d'appui dans des paliers de support (200), pouvant se déplacer librement de manière flottante sur les points d'appui lors de la commande.

6. Dispositif de commande selon la revendication 5, **caractérisé en ce que** le dispositif de cisaillement (30) est monté sur une matière synthétique ayant une capacité de glissement, dans la zone (200) des paliers de support.

7. Dispositif de commande selon l'une quelconque des revendications précédentes, **caractérisé en ce que** le dispositif de cisaillement (500 ou 600) est précontraint à l'aide d'un dispositif de ressort (510), de préférence un ressort de pression ou un ressort à lame.

8. Dispositif de commande selon l'une quelconque des revendications précédentes, **caractérisé en ce que** l'unité de base du dispositif de commande est formée à l'aide du mécanisme de direction (40) du véhicule.

9. Dispositif de commande selon l'une quelconque des revendications précédentes, **caractérisé en ce que** le dispositif de cisaillement (600) est isolé électriquement et est pourvu d'au moins un contact de commutation de commande électrique (610, 620), par l'intermédiaire duquel l'avertisseur sonore du véhicule est déclenché.

10. Dispositif de commande selon l'une quelconque des revendications 1 à 8, **caractérisé en ce qu'**au moins un contact de commutation de commande (50, 60) est fixé sur le mécanisme de direction (40) et son contact inverse sur l'unité de coussin gonflable (10) du véhicule.

11. Dispositif de commande selon l'une quelconque des revendications précédentes, **caractérisé en ce que** le dispositif de cisaillement est développé en tant qu'unité de construction préfabriquée autoporteuse, laquelle est installée lors du montage du dispositif de commande du mécanisme de direction (40) ou de l'unité de coussin gonflable (10).

12. Dispositif de commande selon l'une quelconque des revendications précédentes, **caractérisé en ce que** le dispositif de cisaillement est monté en tant que pièce détachée dans le dispositif de commande, de sorte que la stabilité de celui-ci est réalisée à l'aide du-mécanisme de commande ou de l'unité de coussin gonflable.
